(19)

Europäisches Patentamt
European Patent Office
Office européen des brevets

(11) **EP 3 057 290 A1**

(12) **EUROPEAN PATENT APPLICATION**

(43) Date of publication:
**17.08.2016 Bulletin 2016/33**

(51) Int Cl.:
***H04L 29/08*** *(2006.01)*

(21) Application number: **15382046.9**

(22) Date of filing: **10.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.**
**28013 Madrid (ES)**

(72) Inventors:
• **Picón Cabezudo, José, Alfredo**
**28013 Madrid (ES)**

• **Villegas Núnez, Paulo**
**28013 Madrid (ES)**
• **Andrés Gutiérrez, Juan, José**
**28013 Madrid (ES)**

(74) Representative: **Carpintero Lopez, Francisco et al**
**Herrero & Asociados, S.L.**
**Alcalá 35**
**28014 Madrid (ES)**

(54) **Method, system and device for managing congestion in network services**

(57)     A method, system and device for managing congestion/overload conditions at application level, experienced in a network service provided through a telecommunications network, allowing to provide fast, valid and complete service responses to the service client even when the service servers are overloaded. The congestion management is provided by an intermediary node communicated with the client device and with the server or servers providing the network service. In order to control server(s) overload, this node uses a double congestion mechanism, an early congestion detection mechanism and a response time limit mechanism.

**EP 3 057 290 A1**

Description

TECHNICAL FIELD OF THE INVENTION

The present invention relates to telecommunications services and more particularly to a method, a system and a device for managing congestion (overload) conditions, at application level, experienced in network services provided through a telecommunication network.

BACKGROUND OF THE INVENTION

The amount of services provided at application level through telecommunications networks (network or networked services) increase every day, offering to final users (or network nodes) every kind possible of functions or application. The network services are growing increasingly in popularity and in capabilities, so congestion in network services is becoming a recurring problem. It can show up at many levels in a network stack, from congestion at the packet level to application bottlenecks delaying services.

At the packet level, network congestion is simply produced when a routing node or a link gets traffic exceeding its capacity. In the worst case it can get to network collapse (the troubled section gets into a deadlock and becomes incapable of routing packets). At this low level, TCP (Transmission Control Protocol) congestion control already establishes mechanisms through which clients adjust their transmission so as to control throughput and avoid congestion. Nevertheless, even with such mechanisms in place, congestion can still occur if there are spikes in the number of clients trying to send traffic. Active queue management provides an alternative at the routing level: for example an overloaded network node can use techniques such as Random Early Detection and variants, which monitor queue size or load information to drop packets when needed.

Some published patents, disclosing congestion solutions are for example:

Patent US 8762567 B2: It describes a method through which a processor controls congestion by establishing an acceptance fraction of messages (dropping the messages falling out of that ratio). The acceptance fraction is determined by the arrival rate, in a non-specified manner. It uses a normalized processor capacity to foresee congestion.

Patent US 7187651 B1: It proposes a system at the network level that stores a set of load factors and associates to each one of them a packet rejection ratio, which is applied when the load factor is achieved. The mechanism appears to be pre-defined and fixed. It can differentiate between packets for message initialization and packets for established communications, so as to preferably drop packets for new calls.

Patent US 7266612 B1: It proposes a mechanism to control network overload at TCP packet layer combining the invention with the use of QoS (quality of service) standards. The goal of this invention is to control traffic at a network level and not at the application level. It uses multiple thresholds for different kinds of traffic

However, the existing congestion solutions present different drawbacks. Low-level solutions (for example, at the network packet layer) can only work in a blind manner, since they cannot evaluate the content of the message. Therefore their discard policy will hurt clients indiscriminately. Some of them may establish different priority classes, to keep a higher throughput for high priority packets, but this is still rather blind, since the semantics of the data are kept outside of the competence of the congestion control mechanism. Moreover, since they lack information on the processing service producing the messages, the congestion detection can only be made by analyzing at the network level parameters such as probability of network packet loss or packet queue length. Finally, the only measure those solutions can take is to drop network packets to avoid congestion, thereby affecting the service carrying those packets in an unknown, but possible harmful, way.

Higher level solutions, working at the application level, have a better behavior, as they can identify message communications and discern the type of service they represent; therefore, they could potentially take a more informed decision to both (a) identify congestion and (b) take countermeasures. However, existing solutions identify congestion mostly by tracking source rates, instead of monitoring processing capacity. And the countermeasure is to drop messages and, since the measure will harm the service, it is delayed until they are absolutely necessary (when the service is already overloaded).

The proposed embodiments of the invention stated below will overcome at least some of the drawbacks of the prior art solutions, providing a high level congestion solution which instead of dropping messages, it returns whenever possible, a suboptimal but still useful response (that requires low computing power and which is previously generated) and, furthermore, it actively detects the trend towards congestion and provides mitigation (but not harmful) measures in advance.

# EP 3 057 290 A1

## SUMMARY OF THE INVENTION

The problems found in prior art techniques are generally solved or circumvented, and technical advantages are generally achieved, by the disclosed embodiments which provide a method, system and device for managing congestion in network services at application level.

Some information systems (e.g. web services) may have a highly variable workload. The traditional solution to this problem is to build information systems that can be scaled horizontally. However, the workload may increase unexpectedly beyond system capacity at a given moment and, if the received workload is too high, a system crash may happen. The same apply to other network services which may have a highly variable workload.

The present invention solves this problem in a different way to the traditional one. The invention presents an intermediary system (node), between a remote system (the client device or node, that is, the entity to which the service is provided) and a data processing system (generally speaking, the server or group of servers providing the network service) aiming to generate fast, valid and complete responses even when the data processing system is overloaded (congested). Thus, it is able to maintain the responsiveness of the remote system in any workload situation.

The invention is partially based on the following premise: In high workload situations it is better to generate a response containing not completely accurate data, than to generate accurate data causing a progressive degradation of the system. The present invention pre-loads a generic response message for all users (clients), previously retrieved from the server and when the server is approaching high load situations, the service requests will not be dropped but they will be responded using said generic response (so the requests will not be processed by the server and, therefore, the high load situation of the server is not degraded). The generic response will be valid for all users (or at least for most of them), but somehow suboptimal with respect to the one they could receive if following the standard route (through a fully functional server). This generic response is updated periodically.

The proposed invention includes two simultaneous mechanisms to control the server overload and to generate generic responses instead of the regular ones:

An absolute threshold time to limit the response time. Any request from the client to the server is monitored and an internal counter accumulates the spent time since the request was received. If a configurable threshold is exceeded, the current processing is aborted and a generic response is returned.

An early congestion detection to foresee server overloads. The average response time of the server is continuously computed (as a running average), and when it starts to grow high, a share of requests is not forwarded to (and consequently not processed by) the server and, instead a regular response, a generic one (not specific for said user) is returned. The share of requests not forwarded to the server (but answered with a generic response) is dependent on the monitored response time with a stepwise function; the objective is to keep the server at full load (near saturation) but without overloading it.

In a first aspect, it is proposed a method for managing congestion in a network service provided by a group of servers (one or more servers), the method being characterized by comprising the following steps performed in a first network node (overload manager) in communication with the group of servers:

a) Receiving a service request from a service client device through a first telecommunication network;
b) After receiving the service request, determining whether there is an overload condition in the group of servers;
c) Deciding if activating a contingency mechanism based at least on the determination;
d) If the contingency mechanism is activated for said service request, not sending the service request to the group of servers;
e) If the contingency mechanism has not been activated (in step c):

e1) Sending the service request to the group of servers;
e2) If a service response resulting from processing the service request by the group of servers, is received from the group of servers before a first period of time has lapsed (since the service request was sent to the group of servers), sending said service response to the client device and if not (the service response does not arrive before the first period of time expires), activating the contingency mechanism for said service request;

f) If the contingency mechanism is activated (in steps c) or e2)) for said service request, getting from a database, a generic response, not resulting from processing by the group of servers the service request, and sending said generic response to the client device (terminal).

If the first network node does not receive a service response from the group of servers before the first period of time has lapsed, the network node may send a message to the group of servers to abort the processing of the service request.

The step c) of deciding if activating a contingency mechanism, may comprise:

3

- if it is determined that there is no overload condition in the group of servers, not activating the contingency mechanism;
- if it is determined that there is an overload condition, the contingency mechanism is activated not for all the service requests but only for some of them. In order to do so, for example, a probability of activating the contingency mechanism for said service request is calculated and the contingency mechanism is activated depending on said probability. Said probability may be calculated based on design parameters and the values of the request execution time for the previous M service requests previously received in the first network node, where M is a design parameter.

The determination of the overload condition in the group of servers may be based on the values of a request execution time for the preceding M service requests received in the first network node, where M is a design parameter (for example, an average of all the values, a median, a variance or any other statistic parameter based on said values).

The determination whether there is an early overload condition in the group of servers may comprise:

- calculate the average of the values of the request execution time for the previous M requests received in the first network node, where M is a design parameter;
- if said calculated average is above a first threshold, determining that there is an early overload condition in the group of servers.

If the contingency mechanism is activated, a (hypothetical) request execution time may be estimated for said service request and stored in a database in the first network node (for example for using for early overload condition detection for future service requests).

If the contingency mechanism is not activated for said service request, a request execution time (time spent by the group of servers in processing the request and sending the response to the first network node) may be calculated as the time lapsed from the service request is sent to the group of servers until the service response is received by the first network node and said request execution time is stored in a database in the first network node (for example for using for early overload condition detection for future service requests).

The first network node may be co-located with the group of servers or may be not co-located with the group of servers. In this latter case, it communicates with the group of servers through the first telecommunications networks or through a different telecommunications network. The group of servers may be a data processing group of servers.

In an embodiment, the service request and the service response (and the generic service response) are network application layer (or level) messages.

The client device is one may one of the following group: a mobile telephone, a laptop, a personal computer, an smart phone, an smart TV, a television set, a IPTV TV set, a tablet or any other electronic device.

In an embodiment, the step e1) of sending the service request to the group of servers comprises:

- Decomposing the service request into several sub-requests (also called individual requests),
- Sending the first sub-request to the group of servers and
- Sending each of the rest of sub-requests to the group of servers when a partial response resulting from processing by the group of servers the preceding sub-request, is received (that is, each sub-request is sent to the group of serves is only sent when the response to the previous sub-request has been received from the group of servers);

and the step e2) comprises:

- If all the partial service responses resulting from processing by the group of servers each sub-request, are received from the group of servers before the first period of time has lapsed, composing a service response based on all the partial responses received and sending said service response to the client node and if not, activating the contingency mechanism.

The network service may be an information service (the provided service consist on information included in the service response). In this case, the service response resulting from processing the service request by the group of servers, includes information selected based on the service request content and/or the client profile and the generic response consist on information not selected based on the service request content and/or the client profile (it may be even selected before receiving the service request) For example, the service may be a content recommendation service or a news service and the service response consist on recommended content or news selected based at least on the client profile and/or the content of the request. And the generic response may consist on recommended content or in news valid for all the clients (not selected for an specific client)

The generic service response may be pre-stored in a database (e.g. in a cache memory of the first network node); that is, the generic response may be stored before the service request has arrived to the first network node. Or the generic response may be based in generic data received by the first network node from the group of servers, before the service request has arrived to the first network node; the generic response is not a specific response generated for said service request and/or client profile, but it is independent on the profile of the client requesting the service (or in other words, the generic response may be valid for all the service clients).

In a second aspect, it is provided a network node for managing congestion of a network service, the network node being characterized by comprising:

- Receiving means for receiving a service request from a service client device through a first telecommunication network;
- Means for determining whether there is an overload condition and deciding if activating a contingency mechanism based at least on the determination;
- Means for, if the contingency mechanism is activated for said service request, not sending the service request to a group of servers providing the network service and for, if the contingency mechanism is not activated:

    - Sending the service request to the group of servers providing the network service;
    - If a service response resulting from processing the service request by the group of servers, is received from the group of servers before a first period of time has lapsed, sending said service response to the client device and if not, activating the contingency mechanism for said service request;

- Means for, if the contingency mechanism is activated for said service request, getting from a database a pre-stored generic response, not resulting from processing by the group of servers the service request, and sending said generic response to the client device.

In a third aspect, it is provided a system for managing congestion of a network service, the system being characterized by comprising:

- A group of servers configured for providing the network service by receiving client service requests, processing the requests and generating service responses based at least in the content of the client service requests;
- A network node comprising:

    - Receiving means for receiving a service request from a service client device through a first telecommunication network;
    - Means for determining whether there is an overload condition in the group of servers and deciding if activating a contingency mechanism based at least on the determination;
    - Means for, if the contingency mechanism is activated for said service request, not sending the service request to the group of servers;
    - Means for, if the contingency mechanism is not activated:

        - Sending the service request to the group of servers;
        - If a service response resulting from processing the service request by the group of servers is received from the group of servers before a first period of time has lapsed, sending said service response to the client device and if not, activating the contingency mechanism for said service request;

    - Means for, if the contingency mechanism is activated for said service request, getting from a database a pre-stored generic response, not resulting from processing by the group of servers the service request, and sending said generic response to the client device.

In an embodiment the above stated means may be a processor in the network node configured to perform the above state actions.

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a method, system, device, computer program and storage medium according to the independent claims are provided. Favorable embodiments are defined in the dependent claims. These and other aspects of the invention will be apparent from and elucidated with reference to the embodiments described hereinafter.

The proposed invention provides, among others, the following advantages:

- It is a light solution to control saturation in a server or server farm ensuring a fast response to clients. This means that, although it is an intermediary which stands between a client and a server, the processing is not complex.
- It reduces the amount of required nodes in a server farm to be able to support an abnormal workload received sporadically. It means than the server farm may be dimensioned for a typical workload, but not for an exceptional workload.
- The absolute threshold time ensures a maximum time to execute (process) a request in the server side. This means that the client will get a valid and complete response at a maximum time.
- The early congestion detection is done over the application layer of the network protocol. It means that the requests from the client to the server are not rejected at the TCP layer, therefore the remote system does not notice any exceptional situation.
- The early congestion detection is an automatic adaptive mechanism. Its goal is to keep the server at full load (near saturation) but without overloading it. Additionally, the early congestion detection ensures that at least a minimum rate of requests goes to the server to monitor its state continuously.
- The server remains fully functional even when approaching full capacity. In other words, it can keep the server at high load without overloading it.
- The generic response is updated time-to-time to avoid obsolete responses and they are stored in a fast access memory to ensure that the generic response is returned immediately even when a high workload is received.

## DESCRIPTION OF THE DRAWINGS

To complete the description that is being made and with the object of assisting in a better understanding of the characteristics of the invention, in accordance with a preferred example of practical embodiments thereof, accompanying said description as an integral part thereof, is a set of drawings wherein, by way of illustration and not restrictively, the following has been represented:

Figure 1: It shows a schematic block diagram of the proposed system according to one embodiment of the invention.

Figure 2: It shows a flow diagram of the control of service congestion (overload) according to an embodiment of the invention.

Figure 3: It shows a flow diagram of the checking of DPS overload according to an embodiment of the invention.

Figure 4: It shows a flow diagram of the monitoring of the execution (processing) time according to an embodiment of the invention.

## DETAILED DESCRIPTION OF THE INVENTION

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope. In the following description, for purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

The present invention proposes a method, system and device capable of managing congestion (server(s) overload) in a network service (a data processing service, a web service or any other type of network service). In this context, a network service is a service provided at the network application layer. It is often implemented using a client-server architecture based on network application layer protocols (peer-to-peer architectures can also be used). The network services can provide data storage, manipulation, information customization, presentation, communication or other many application-level capabilities. Each service is usually provided by a server (generally speaking a group of servers running on one or more computers) and accessed via a telecommunications network by client devices. The network service may be provided by an application or a coordinated set of applications running on the servers and communicating high-level messages between them and to the client applications through the network.

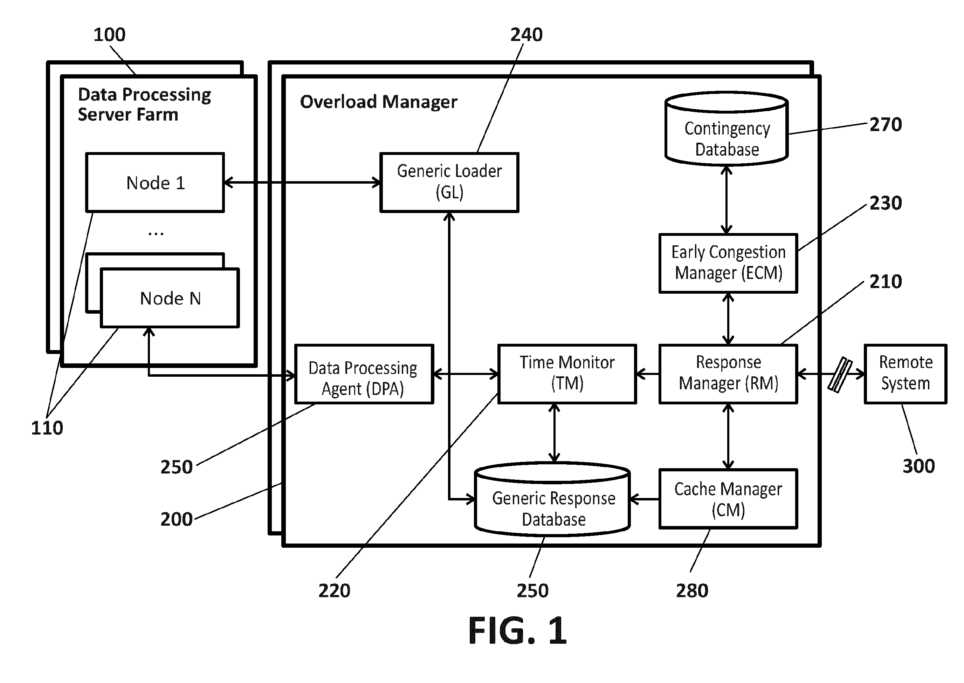

Figure 1 shows a block diagram of the proposed system according to one embodiment of the invention. The system proposed by the present invention, presents an intermediary system or node (called Congestion or Overload Manager 200) connected to one or more server(s) providing the network service. Generally speaking, these servers will be in charge of performing the data processing necessary to response the service request (and generating the service response to be sent to the service requesting client), that's why this server(s) (providing the service) is (are) called Data Processing Server(s) or more general, Data Processing Server Farm (DPS, 100) which is the group of one or more servers providing the service. The Manager can be connected to a single server farm or to a set of different server farms. Each farm can be composed of an undefined number of nodes (N nodes (110) in figure 1, where N>=1), which will be in charge of the final processing (computing) process and will be responsible of providing the application-level responses that the client to which the service is provided (the remote system in figure 1) expects.

In an embodiment, the result of the network service is a response message sent by the service provider to the service client (the service response). For example, the service may be an information service (e.g. a recommendation service, a news service...) in which the client requests an information, the data processing server (or servers) process the request and obtains, selects and prepare the information (according to the content of the request and/or the client profile) and the service result is a response message sent to the client with the requested information. But this is only an example, generally speaking the present invention can be applied to any type of network services, which gives a response to the client requesting the service.

The overload manager is also connected to a client device, called remote system (300), that will be the device (terminal or generally speaking, a node) that makes the original (service/information) high-level request (application level request) and to which the service is provided. Depending of the service provided, the remote system can be for example, a communication terminal subscribed to the service or other network node to which the service is provided.

The remote system will be connected to the overload manager through a telecommunications networks. The overload manager may be co-located with the server for fast access to the farm nodes or may be located in a location distant to the server and being connected to the server through the same or a different telecommunications network. Usually, in this latter case (the overload manager is not co-located with the server), the speed and delay of the link between the overload manager and the server are enough to keep swift communication between them. The telecommunications network can be a wired network, a wireless network, a mobile communications network (LTE, 3G, 4G, GSM...) or any other type of telecommunication network. The provided service can belong to the same operator owning the telecommunication network or to another operator. The overload manager can be located in a network node of the telecommunications network or in a network node belonging to another network.

The remote system (client device) may be a mobile telephone, a laptop, a computer system, an smart phone, an smart TV, an IPTV (Internet Protocol Television) TV set, a tablet or any other electronic device capable of communicating through a telecommunications network.

The congestion or overload manager (200) represents the core of the system. More than one overload manager can be used (for example, one for each service provided by the network or one for every service farm or, if the number of clients of a service is very high, there can be several managers for the same service, one for each group of clients). Each overload manager (200) performs different functions; for simplicity and clearness, the overload manager can be seen as a node with different functional elements or modules, each one in charge of at least one function (in an embodiment, the manager will include a processor configured to perform some or all the functions). In the embodiment shown in figure 1, the overload manager is composed by the following modules (this is only an example and some of the modules are optional and, consequently, not essential for the invention):

Response Manager (RM) (210): In charge of receiving the original request from the client (remote system). If the contingency mechanism is activated (by the Early Congestion Manager or by the Time Monitor) the generic response will be delivered to the remote system. If not, the request will be sent to the Data Processing Server Farm, DPS; the DPS will generate a suitable response specific for said request and the RM will send the response message to the client.

Time Monitor (TM) (220): It takes care of ensuring a maximum threshold in response time (absolute threshold time); it monitors global processing time of the request (the time spent by the DPS in processing the request and generating a response, called also request execution time, execution time or response time) and if it detects that the operation is reaching a threshold (that is, a certain time threshold has lapsed and the response has not been yet generated by the DPS), it aborts processing and activate the contingency mechanism.

Early Congestion Manager (ECM) (230): It applies the Early Congestion Detection by monitoring the ongoing response times and whenever the ongoing response time (for example, an average of the responses time for the last M requests, where M is a design parameter) grows at a risky pattern, it activates the contingency mechanism that starts non forwarding requests to the server (at a dynamic rate) to keep the data processing servers just below congestion.

Generic Loader (GL) (240): Periodically (the period may be application- and data-dependent) requests from the data processing server a generic response or set of generic responses (or generally speaking, generic data to compose a generic response) valid as a fallback mechanism (in contingency situations) for the range of possible requests that the system can receive.

Data Processing Agent (DPA) (250): In some services or for some specific requests, a single remote system request message is decomposed (in this module) into a number of single operations to be sent to data-processing servers. The final (also called global) response will be created by composing together the single responses to the different single operations in which the request has been decomposed. Also it is possible that a remote system request message corresponds to a unique request message to the data processing servers (so there is no decomposition/composition process).

Generic Response Database (GRDB) (260): Database in charge of storing generic responses. These responses are previously calculated by the Generic Loader.

Contingency Database (CDB) (270): Database in charge of storing execution times and configuration parameters required by the Early Congestion Manager to calculate if the contingency mechanism must be activated.

Cache Manager (CM) (280): Its purpose is to keep the generic response in a local and fast memory (cache memory) to improve performance (the access to the generic response is faster) when the contingency mechanism is activated.

Now the detailed operation of the present invention (that is, the different steps performed or, in other words the data processing flow), according to different embodiments of the invention, is going to be explained.

When the overload manager detects a congestion situation in the service server(s) (for example in the data processing servers) a contingency mechanism is activated to generate a response to the remote system using generic data, in order to return a fast response. The whole data processing flow may be divided into two different and uncoupled processes:

**Preloading of generic data:** The precondition to make the system work consists of loading generic data, which will be used to generate a response when the contingency mechanism goes into action.

**Controlling server congestion:** When a new request message arrives to the overload manager from the remote system, it must be managed to control overload in the DPS and to activate or not the contingency mechanism (that is, to determine if a congestion situation is happening or is close to happen). This process is divided in three sub-processes:

Early congestion management: An early congestion checking is done in order to detect if the data processing servers are (or are closed to be) overloaded. When a congestion situation is detected, some requests (not all) are responded using the contingency mechanism.

Request execution time monitoring: If the remote system request is not responded with generic data, it is sent to the DPS and the spent time is controlled to ensure that it does not exceed a specific threshold. When this happens (the timeout is consumed), the request is responded using the contingency mechanism.

Delivering of generic response: When an early congestion situation is detected or the request execution timeout is consumed, the overload manager activates the contingency mechanism, composing (if it is not already composed) and delivering the response to the remote system based on generic data.

### Preloading of generic data

The generic loader (GL) is the responsible to get generic data from the DPS and to store them into the generic response database (GRDB). Said generic data will be used to build the generic response message (that will be sent to the client requesting the service when the contingency mechanism is activated). In order to have an updated generic response, the generic data loader is executed periodically (the execution interval is application and service (data) dependent). Each time it is executed, a request to a data processing server is done to get generic, but valid, results to be returned when the contingency mechanism goes into action. The returned data should be generic enough to meet the expectations of most of the system clients but it will be not generated taking into account an specific client profile or request. For example, if it is a TV recommendation system, the generic response can be a general guide of the available TV programs or a list of the most viewed TV programs, which is not customized for a specific client so it is valid for all the clients (subscribed users). The retrieved data from the DPS must be stored in the GRDB in the appropriate format to be able to generate a generic response message as fast as possible.

### Controlling service congestion

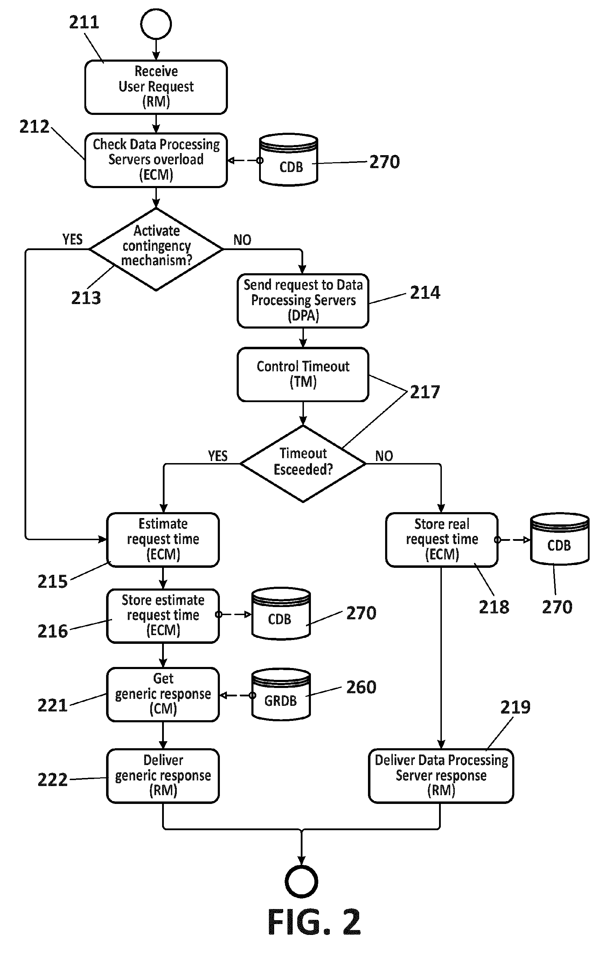

Figure 2 shows a flow activity diagram of the process to control the server(s) congestion in an embodiment of the invention. This process is divided in three sub-processes:

1) Early congestion management: The main goal of this sub-process is to detect congestions (i.e. overload) in the data processing servers. This sub-process is carried out by the Early Congestion Manager (ECM) using the data stored in the Contingency DB (CDB). It is responsible for the following tasks:

Check data processing servers overload: After the RM receives (211) a remote system request (a service request message), the ECM checks if the DPS is overloaded (212) and if the contingency mechanism must be activated (213). These decisions may be based on the registered execution times (stored in the CDB) for the latest processed requests and on some configuration parameters. A specific method should be used to take this decision. For example, if the response time averaged for the last M requests is more than a certain threshold, it is determined that the DPS is overloaded and, consequently the contingency mechanism must be activated. This is only an example, another examples will be explained later. Generally speaking any known decision method can be used to take this decision. If the contingency mechanism is not activated, the request is sent to the DPS for processing (214) by the DPA.

Estimate request execution time (also called processing time): When the contingency mechanism goes into action, it is not possible to know exactly how much time would have been consumed by the DPS processing the request to prepare the response, so it must be estimated (215). Later some examples of how to estimate this execution time will be explained.

Register request execution time: Each time a remote system request is processed by the overload manager, the estimated or real execution time of the request is stored (216, 218) in the CDB. These measurements are used to determine if the DPS are congested (overloaded) in future service requests.

2) Execution time monitoring (217): If the contingency mechanism has not been activated, the request is sent to the DPS for processing (214). The main goal of this sub-process is to control the time consumed by a request to the DPS. If this time exceeds a given time limit (that is, a certain time limit lapsed since the request has been sent to the DPS, without the overload manager receiving a response from the servers) the request to the DPS is aborted and the contingency mechanism is applied, performing the actions of estimating (215) and storing (216) the execution time and getting (221) and delivering (222) the generic response. Thereby, long waits to generate a response to the remote system requests are avoided. This sub-process is carried out by the Time Monitor (TM), in collaboration with the Data Processing Agent (DPA) and the Response Manager (RM).

3) Delivering of generic response: At the end of the processing of the request of remote system a final response must be generated. If the whole process is executed successfully (that is, the contingency mechanism is not activated), the real execution time is stored (218) (in the CDB) and the response generated by the DPS is routed through the DPS to the RM and the service response (a service response message) is sent to the remote system (219) through the telecommunications network.

But, if the whole process is not executed successfully (i.e the contingency mechanism is activated because of early congestion detection or because the request execution time exceeds the threshold), the response manager must execute this mechanism to return a generic response. It must be pointed out, that if early congestion is detected, the contingency mechanism is not activated for all incoming requests but usually only to some of them (the rate of incoming requests for which the contingency mechanism is applied may be updated for each incoming request and it will depend on a configuration parameter) The delivery of the generic response may comprise the following steps:

The RM calls the Cache Manager (CM) to get the generic response.
If the CM contains the generic response and this data is valid, the CM returns the generic response to the RM.
If the CM does not contain the generic response or the cached data is not valid, the CM gets the generic response from the GRDB, caches it and returns the generic response to the RM.
Once the RM gets the generic response (221), it is delivered to the remote system (222) through the telecommunications network.

The CM is used to improve performance when the contingency mechanism is executed. Because the contingency mechanism is activated when the system is overloaded, it is necessary to minimize the resources used to generate the generic response. Therefore, the CM stores the cached data in a fast store, local to the RM, to avoid doing network connections to the GRDB which usually is hosted in a dedicated node within the Overload Manager, which may not be local to the RM (for example, the GRDB may be hosted in another node within the same set of nodes). However, the cached data will not always be valid. After a period of time or when the cached data have been used a number of times, it is invalidated and it must be regenerated by getting again the generic response from the GRDB.

But the presence of the cache manager is not mandatory. In an alternative embodiment, there is no cache manager, so the generic response is always requested and obtained directly by the RM from the GRDB.

Now, embodiments that materialize some of the specific procedures mentioned in the control of service congestion process previously disclosed, will be explained. They are applicable to any network services.

Estimating the expected execution time (also called response time) for the data processing servers: As explained before, the present invention needs to estimate the execution time (time spent in processing the request and generating a response) for the data processing server(s) when the contingency mechanism is activated (actually, , as the DPS does not give a response to the request, it can be said that what it is estimated is an hypothetical execution time, that is, an estimation of how much time would have been consumed by the DPS in processing the request and prepare the response). This estimation is made in order to trigger the different phases of the congestion detection mechanism for future requests. The simplest measure is to use the time of the last execution (that is, the execution time of the previous request). However this is unreliable (glitches and transitory phenomena may produce occasional hiccups in processing time that are not relevant in congestion terms), therefore embodiments will tend to perform some kind of averaging over the last R executed requests, so as to smooth down short-term irregularities. Some embodiments may also choose additional variants:

Use a running median instead of the mean value, as a way to remove uninteresting outliers from the computation and retain the true underlying congestion status.
In case an execution is aborted due to exceeding the threshold in the Time Control module, the estimated time (added to the averaging window) would be the time so far plus a random increment which depends on the number of recently aborted requests (to estimate the eventual final time including the effect of congested servers).

The above are only some examples of how to estimate the execution time, other variants and known estimation methods could be used.

Checking data processing servers overload (for the early congestion detection): A specific procedure should be applied to decide if the DPS (the Data Processing Server or Server Farm) are overloaded and if the contingency mechanism must be activated (a generic response must be sent to the requesting client). Here, as an example, a procedure which could be used for this purpose is going to be explained according to an embodiment of the invention. In this embodiment, the main data points and parameters required by the method to take the decision are:

- The current average execution time of the last requests.
- The threshold for the average execution time from which the DPS are considered as overloaded.
- The current probability/rate to not forwarding the request to the DPS (that is, the current rate for activating the contingency mechanism and using generic data for the request response).
- The maximum rate of request responded with generic data (not forwarded to the DPS), to ensure that at least some requests are sent to the DPS in order to measure if the DPS are still overloaded or not.

This early congestion detection/management may use, for example, the following configuration parameters to operate (usually these parameters are properly selected and customized for each specific application, for example using performance tests, in order to optimize the system operation and results):

- OVERLOAD_MNG_ENABLE (boolean): Flag to determine if the early congestion detection is enabled or disabled. If it is disabled, all requests are sent to the DPS.
- OVERLOAD_MNG_QUEUE_SIZE (integer): Number of requests execution time values used to calculate the average execution time of DPS
- OVERLOAD_MNG_THRESHOLD (integer): Time (e.g in milliseconds) from which, if the average DPS execution time exceeds it, the DPS are considered as overloaded.
- OVERLOAD_MNG_STEP (integer): Time (e.g in milliseconds) per step to increase the rate of requests responded with generic data.
- OVERLOAD_MNG_RATE_STEP (float): Rate of requests to be responded with generic data (or in other words, the rate of requests for which the contingency mechanism is going to be activated) per step.
- OVERLOAD_MNG_RATE_MAX (float): Maximum rate of requests to be responded with generic data. It must be less than one to ensure that some requests are send to the DPS when it is considered as overloaded, in order to measure the execution time and to know if the DPS are still overloaded or not.

In addition, two variables may be used:

- time_queue: It is a LIFO (Last In First Out) queue to maintain the execution time of the last requests. Every time a request execution time measurement (a real measurement if the last request has been successfully processed by the DPS, or an estimation) is appended to the queue, other element is removed from the queue from the opposite side, to keep a maximum number of request execution time measurements in the queue. The queue size is set to the OVERLOAD_MNG_QUEUE_SIZE parameter value.
- average_time: It is the average request execution time along the last requests. It is calculated using all measurement in the time_queue. As an accuracy measure, in an embodiment, if the queue is filled with less than, for example, the half of its size (but other values can be used), the average time is not calculated and the overload (congestion) control is considered as disable. This is only an example, alternative embodiments could use the median or other summary statistic instead of the mathematical average.

Each time a new request arrives to the overload manager from the remote system (client), the DPS updates the average_time and checks if this value exceeds a configured threshold (OVERLOAD_MNG_THRESHOLD). If this happens, it means that the DPS is considered overloaded (congested). Then, the overload manager must decide if the current request is not sent to the DPS and a generic response is sent to the remote system (i.e the contingency mechanism is activated). This decision is based on a probability. This probability may be calculated, for example, depending on how many steps the threshold is surpassed. Each step is an amount of time (milliseconds) and each step has associated a probability.

In an exemplary embodiment, the following configuration parameter values are selected (this is only an example, many other values can be used):

OVERLOAD_MNG_THRESHOLD = 300 ms
OVERLOAD_MNG_STEP = 50 ms
OVERLOAD_MNG_RATE_STEP = 0.2 (20%)

If the average time is, for example, 360 ms, the probability to response with generic data (to activate the contingency mechanism) the current request may be calculated as:

$$\text{num\_steps} = \text{int}((360ms - 300ms + 50ms) / 50ms) = 2$$

$$\text{probability (current rate)} = \text{num\_steps} * 0.2 = 0.4 \ (40\%)$$

This probability cannot be greater than the OVERLOAD_MNG_RATE_MAX value, and, in any case, the maximum limit for this value is for example, 0.9. The probability to activate the contingency mechanism for the current request in his case will be 0.4 The calculated probability is compared, for example, with a random number in the range [0, 1) to finally decide if the current request is not sent to the DPS and the contingency mechanism is activated to produce a generic response for the current requests.

In another exemplary embodiment, the following configuration parameter values may be selected:

OVERLOAD_MNG_THRESHOLD = 300 ms
OVERLOAD_MNG_STEP = 30 ms
OVERLOAD_MNG_RATE_STEP = 0.3 (30%)

If the average time is the same as before, 360 ms, the probability to activate the contingency mechanism for the current request is as follows:

$$\text{num\_steps} = \text{int}((360ms - 300ms + 30ms) / 30ms) = 3$$

$$\text{probability} = \text{num\_steps} * 0.3 = 0.9 \ (90\%)$$

The probability of activating the contingency mechanism for an incoming request in his case will be 0.9. That is, with the same threshold and the same average time as in the previous example, the probability of activating the contingency mechanism is much higher. This is because some of the configuration parameters (OVERLOAD_MNG_STEP, OVERLOAD_MNG_RATE_STEP) have been selected so that the system is much more sensitive to any increase in the average execution time (there are more probabilities to activate the contingency mechanism). In other words, depending of the specific situation (application) to which the present invention is applied, a more or less sensitive (strict) congestion detection can be used depending on the value selected for the configuration parameters.

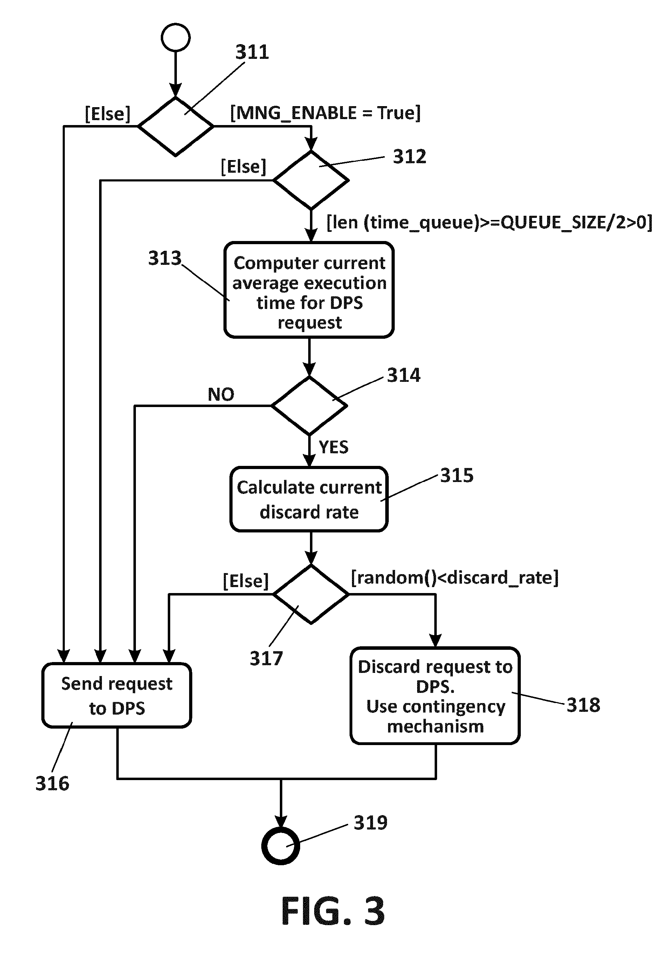

To summarize and clarify the above explained process, figure 3 is going to be used. Figure 3 shows a flow activity diagram of the process to check the DPS overload (for early congestion detection) according to the above explained embodiment of the invention.

When a new request (a request message) arrives to the overload manager from the remote system (client), the first step is to check (311) if the early congestion detection is activated (for example, checking that OVERLOAD_MNG_ENABLE parameter is True). If it is not activated, all the requests are sent to the DPS for processing (316) and the procedure is finished (319). If it is activated, then it is checked (312) if the time queue (storing the execution time of the last requests) has enough values to give an acceptable average (in this case half of the values). If not, the early congestion is considered disabled, all the requests are sent to the DPS for processing (316). If it has enough values, the current average execution time of the last requests (in this case, the values stored in the queue) is computed (313). Then it is checked (314) if the current average execution time exceeds a configured threshold (e.g. OVERLOAD_MNG_THRESHOLD). If it does not exceed the threshold, then the request is sent to the DPS for processing (316). If the threshold is exceeded, then, the current rate of requests to be responded with generic response is calculated (315), or in other words, the rate to be applied to the current request is calculated. In this specific example, to calculate said rate, the following operations are performed:

$$\text{num\_steps} = \text{int}((\text{average time} - \text{OVERLOAD\_MNG\_THRESHOLD} + \text{OVERLOAD\_MNG\_STEP})/ \text{OVERLOAD\_MNG\_STEP}$$

$$\text{probability} = \text{num\_steps} * \text{OVERLOAD\_MNG\_RATE\_STEP}$$

$$\text{current rate} = \min (\text{probability}, \text{OVERLOAD\_MNG\_RATE\_MAX})$$

Finally, the calculated current rate is compared, for example, with a random number (317) to finally decide if the current request is sent to the DPS (316) or the contingency mechanism is activated (318) to produce and sent to the client a generic response for the current requests.

The above are only some examples of how to ckeck DPS overload, other variants and known methods could be used.

Execution time monitoring: A specific procedure should be used to control (monitor) the time consumed by the DPS when processing a request (request execution time or only execution time). As previously explained, if a given timeout is exceeded the contingency mechanism must be activated. Here, as an example, a procedure which could be used for this purpose (monitoring the execution time) is going to be explained according to an embodiment of the invention. This procedure generally applies when each request from the remote system must be decomposed into several (sub) requests sent to the DPS to get several pieces of data (one for each sub-request) that the Data Processing Agent (DPA) must combine to generate the final response. If this is not the case (the request is not decomposed into several (sub) requests), the same procedure may apply but with the particular condition that there is only a single sub-request.

This procedure may use, for example, the following configuration parameter to operate (usually this parameter is properly selected and customized for each specific application, for example using performance tests, in order to optimized the system operation and results):

- REQUEST_TIMEOUT (integer): It is used to set the maximum time (e.g. in milliseconds) to process completely a request from the remote system and to generate a final response (that is, the maximum execution time). If this timeout is exceeded while the DPS processing is in progress, the contingency mechanism is activated and the final response is created using the generic data. If the REQUEST_TIMEOUT parameter is set to zero or nul, no time limit is applied when processing request to the DPS.

In addition, one variable may be used:

- pending_timeout (integer): It is used to control the remaining time to execute the pending (sub) requests to the DPS. It is initialized to the REQUEST_TIMEOUT value, and every time an individual request to the DPS is executed the consumed time is measured and the pending_timeout is decreased by this value.

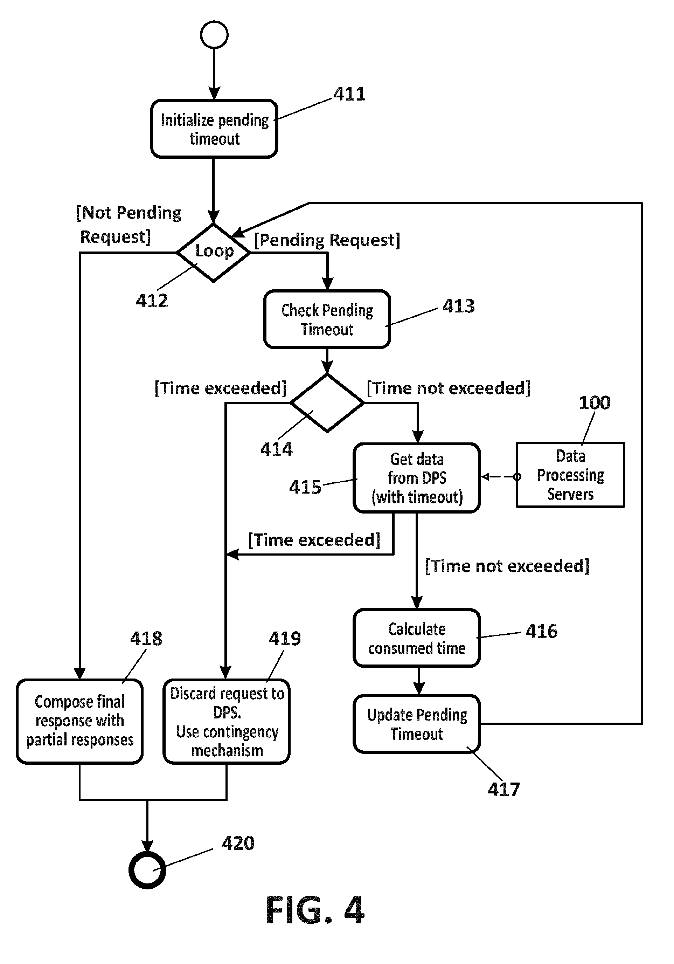

To explain this procedure figure 4 is going to be used. Figure 4 shows a flow activity diagram of the method to monitor the request execution time according to an embodiment of the invention.

As explained before, the DPA (Data Processing Agent) decomposes a request from the remote system into a number of single operations (called sub-requests or individual requests). It performs a loop to send individual requests to the DPS to get pieces of data to compose the final response to the original request. In order to monitor the execution time, initially, the pending_timeout is set to the REQUEST_TIMEOUT value (411). This is the total time available to execute all loop iterations (that is, to process all the individual requests in order to generate the final response). The pending_timeout is updated at the end of each loop iteration by subtracting the consumed time by the individual request to the DPS. Therefore, for each iteration it is known the remaining time to execute all pending work.

First, it is checked (412) whether all the individual requests have been processed or not (in other words, if another loop must start or not). If all the individual requests have been processed (there are no pending request), the final response is composed (418) with all the partial responses (the responses to each individual requests) and the procedure finishes (420). If there are pending individual requests to be processed then, then another loop starts to process another individual request. At the beginning of each loop iteration, it is checked (413, 414) if the remaining time to execute all pending work (pending time out) is less or equals to zero. If it is less or equals to zero (the timeout has been exceeded), then the normal process in the DPA is aborted (no more individual requests are sent to the DPS) and the final response is generated by the contingency mechanism (419), that is, the generic response is sent to the remote system.

If not (the pending time is more than 0 and consequently, the timeout has not been exceeded), the DPA sends the next individual request to the DPS to get a piece of data (a partial response) from the DPS (415). The pending_timeout is used as the maximum time available for the current individual request. If this time is consumed before the response to the individual DPS request is received, the normal process in the DPA is aborted and the final response is generated by the contingency mechanism (419). If not, the time consumed by the DPS to process (to generate the partial response for) the current individual request is calculated (416), the pending time out is updated (417) by subtracting the calculated consumed time from the previous value of the pending time and it is checked (412) whether all the individual requests have been processed or not (that is, it is checked if another loop must start or not).

As mentioned in the Background of the Invention section, there are many established procedures for congestion control in networked services. However most of them deal at a very low level (e.g. at the network layer), discarding packets whenever they detect an overload situation. Some of them contain specific policies for fair redistribution of the effects, but in any case the procedure is necessarily rather blind. In contrast, the present invention solves the problem at the application level, hence it is aware of the nuances of the service is providing and can improve its contingency behavior. The present invention can be applied to many kind of network services, but it is particularly suitable for services that require intensive processing at the server level, and in which it is possible to prepare a suboptimal (but still valid) more generic response to be delivered to the requesting agent in case of overload. An especially applicable target area is the one in which the system offers personalized services (i.e. delivers data adapted for each specific user), possibly costly to obtain, but can also return a (slightly less optimal) un-personalized (un-customized for an specific client) version of the data. Examples of services where the present invention could be applied and would be very useful, are recommendation systems (services) and news personalization services. These are only two (non-limitative) examples where the present invention is useful. It will be understood that the present invention can be applied to many other types of services.

Recommendation Services:

In this case the data processing servers (the servers providing the service) are recommendation engines. They get requests from the client applications (routed through the overload manager) to provide recommendation lists for users. A recommendation list typically consists of a ranked list of items, personalized for each user according to its user profile. A number of different algorithms for recommendation engines exist (Collaborative Filtering, Content-Based, Social/Graph Based, etc.). The process through which a recommendation is produced can be intensive in terms of computational needs, moreover the recommendation usually it needs to be composed in near-real time (to provide fast response to a user navigating the client application). And it can change at short notice (as the user profile is being continuously updated, to take advantage of the feedback generated by live actions); this limits the usefulness of caching recommendations. As a result, the recommendation engines must be adequately dimensioned to provide enough computational power to deliver fast recommendations, and in traffic peaks (many clients connecting to the recommendation system) bottlenecks and congestion may happen. This makes it a perfect environment for the overload (congestion) management mechanism this invention implements.

In this application scenario, the embodiment of the present invention may present, among others, the following features:

- A number of recommendation engines are connected to a overload manager, which receives the requests and routes them to one of the engines, balancing the load.
- The recommendation engine can also produce non-personalize generic ranked lists (e.g. by using top-rated, or popular content), this will be used as a fallback recommendation mechanism (generic response). The loader for generic content (GL) uses this engine mode to pre-fetch results suitable for all the users.
- The overload manager monitors engine response time; if necessary the Time Monitor (RM) aborts the request and delivers fallback recommendations.

- Likewise, if the early congestion detection resolves a potentially dangerous situation, it triggers the contingency mechanism and starts delivering fallback recommendations to a random subset of requests.

Personalized News Service:

In this embodiment, similarly to the recommendation case, a personalized result is delivered for each user connecting to the system. News are selected according to the user profile and/or user request, and a news page is composed by taking those selected news items and formatting them as needed. The process is also intensive in data processing, since it combines a content filtering phase and a rendering of content. In a normal situation it will produce content specially adapted to the user, but in critical cases, it could resolve to pre-generated sets of news items. In this application scenario, the embodiment of the present invention may present the following features:

- Personalized news engines act as the data processing servers. They are connected to user profiles for each of the platform users.
- A set of results is pre-generated (e.g. for a few number of different client characteristics) and updated periodically to keep it fresh. This is the fallback content (generic response) used by the overload control mechanism in case it resolves the need to cut on processing demands on the news engines.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Even though many of the presented embodiments are referred to network services, the present invention is not limited to this kind of services but it can be applied to other services provided through telecommunications networks.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for managing congestion in a network service provided by a group of servers (100), the method being **characterized by** comprising the following steps performed in a first network node (200) in communication with the group of servers (100):

   a) Receiving (211) a service request from a service client device (300) through a first telecommunication network;
   b) After receiving the service request, determining (212) whether there is an overload condition in the group of servers (100);
   c) Deciding (213) if activating a contingency mechanism based at least on the determination;
   d) If the contingency mechanism is activated for said service request, not sending the service request to the group of servers (100);
   e) If the contingency mechanism is not activated:

e1) Sending (214) the service request to the group of servers (100);

e2) If a service response resulting from processing the service request by the group of servers, is received from the group of servers before a first period of time has lapsed, sending said service response to the client device (300) and

if not, activating the contingency mechanism for said service request;

f) If in steps c) or e2) the contingency mechanism is activated for said service request, getting (221) from a database a pre-stored generic response, not resulting from processing by the group of servers the service request, and sending (222) said generic response to the client device.

2.  A method according to any of the previous claims, where in step e), if the first network node (200) does not receive a service response from the group of servers before the first period of time has lapsed, it further sends a message to the group of servers to abort the processing of the service request.

3.  A method according to any of the previous claims, where the step of deciding (213) if activating a contingency mechanism, comprises:

    - if it is determined that there is no overload condition, not activating the contingency mechanism;
    - if it is determined that there is an overload condition, calculating a probability of activating the contingency mechanism for said service request and activating the contingency mechanism based on said probability.

4.  A method according to claim 3 where said probability is calculated based on design parameters and the values of the request execution time for the previous M service requests received in the first network node, where M is a design parameter.

5.  A method according to any of the previous claims, where the determination of the overload condition in the group of servers (100) is based on the values of a request execution time for the preceding M service requests received in the first network node, where M is a design parameter.

6.  A method according to any of the previous claims, where if the contingency mechanism is activated, a request execution time is estimated for said service request (215) and is stored (216) in a database (270) in the first network node (100).

7.  A method according to any of the previous claims, where if the contingency mechanism is not activated for said service request, a request execution time is calculated as the time lapsed from the service request is sent to the group of servers until the service response is received by the first network node and said request execution time is stored (218) in a database (270) in the first network node (200).

8.  A method according to any of the previous claims, where the first network node is not co-located with the group of servers and it communicates with the group of servers through the first telecommunications networks.

9.  A method according to any of the previous claims where the service request and the service response are network application layer messages.

10. A method according to any of the previous claims where the client device is one of the following group: a mobile telephone, a laptop, a personal computer, an smart phone, an smart TV, a television set, a IPTV TV set, a tablet or any other electronic device.

11. A method according to any of the previous claims where the step e1) of sending the service request (214) to the group of servers comprises:

    - Decomposing the service request into several sub-requests,
    - Sending the first sub-request to the group of servers and
    - Sending each of the rest of sub-requests to the group of servers when a partial response resulting from processing by the group of servers the preceding sub-request, is received;

and the step e2) comprises:

- If all the partial service responses resulting from processing by the group of servers each sub-request, are received from the group of servers before the first period of time has lapsed, composing the service response based on all the partial responses received and sending said service response to the client node and if not, activating the contingency mechanism.

12. A method according to any of the previous claims where the network service is an information service, the service response resulting from processing the service request by the group of servers, includes information selected based on the service request content and/or the client profile and the generic response consist on information selected before receiving the service request.

13. A network node (200) for managing congestion of a network service, the network node being **characterized by** comprising:

- Receiving means for receiving (211) a service request from a service client device (300) through a first telecommunication network;
- Means for determining whether there is an overload condition (212) and deciding (213) if activating a contingency mechanism based at least on the determination;
- Means for, if the contingency mechanism is activated for said service request, not sending the service request to a group of servers (100) providing the network service;
- Means for, if the contingency mechanism is not activated:

  - Sending (214) the service request to the group of servers (100) providing the network service;
  - If a service response resulting from processing the service request by the group of servers, is received from the group of servers before a first period of time has lapsed, sending said service response to the client device (300) and if not, activating the contingency mechanism for said service request;

- Means for, if the contingency mechanism is activated for said service request, getting (221) from a database a pre-stored generic response, not resulting from processing by the group of servers the service request, and sending (222) said generic response to the client device.

14. System for managing congestion of a network service, the system being **characterized by** comprising:

- A group of servers (100) configured for providing the network service by receiving client service requests, processing the requests and generating service responses based at least in the content of the client service requests;
- A network node (200) comprising:

  - Receiving means for receiving (211) a service request from a service client device (300) through a first telecommunication network;
  - Means for determining whether there is an overload condition in the group of servers (100) and deciding (213) if activating a contingency mechanism based at least on the determination;
  - Means for, if the contingency mechanism is activated for said service request, not sending the service request to the group of servers (100);
  - Means for, if the contingency mechanism is not activated:

    - Sending (214) the service request to the group of servers (100);
    - If a service response resulting from processing the service request by the group of servers is received from the group of servers before a first period of time has lapsed, sending said service response to the client device (300) and if not, activating the contingency mechanism for said service request;

  - Means for, if the contingency mechanism is activated for said service request, getting (221) from a database a pre-stored generic response, not resulting from processing by the group of servers the service request, and sending (222) said generic response to the client device.

15. A digital data storage medium storing a computer program comprising computer-executable instructions for performing the method according to any of the claims 1-12, when the program is run on a computer.

**FIG. 1**

EP 3 057 290 A1

FIG. 2

**FIG. 3**

FIG. 4

Europäisches
Patentamt

European
Patent Office

Office européen
des brevets

# EUROPEAN SEARCH REPORT

Application Number

EP 15 38 2046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 748 450 B1 (DUTTA RABINDRANATH [US]) 8 June 2004 (2004-06-08) | 1,8-11, 13-15 | INV. H04L29/08 |
| Y | * column 4 - column 5 * | 2-4 | |
| A | * figures 2, 3 * | 5-7,12 | |
| | ----- | | |
| X | Huamin Chen ET AL: "A Tiered System for Serving Differentiated Content", World Wide Web, 1 December 2003 (2003-12-01), pages 331-352, XP055207794, Boston DOI: 10.1023/A:1025609904398 Retrieved from the Internet: URL:http://rd.springer.com/content/pdf/10.1023/A:1025609904398.pdf | 1,5-15 | |
| A | * page 333 * * page 340 * * figure 1 * | 2-4 | |
| | ----- | | |
| A | Michelle Zatlyn: "Error 522: Connection timed out - CloudFlare Support", , 28 January 2015 (2015-01-28), XP055207804, Retrieved from the Internet: URL:http://web.archive.org/web/20150128060858/https://support.cloudflare.com/hc/en-us/articles/200171906-Error-522-Connection-timed-out [retrieved on 2015-08-14] * the whole document * | 1 | |

TECHNICAL FIELDS
SEARCHED (IPC)

H04L

-/--

The present search report has been drawn up for all claims

| Place of search | Date of completion of the search | Examiner |
|---|---|---|
| The Hague | 18 August 2015 | Dely, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 38 2046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "mysql-genocide - search.cpan.org", , 29 October 2014 (2014-10-29), XP055207808, Retrieved from the Internet: URL:http://web.archive.org/web/20141029173 646/http://search.cpan.org/˜rsoliv/mysql-g enocide-0.03/mysql-genocide [retrieved on 2015-08-14] * page 4 * ----- | 2 | |
| Y | XUE LIU ET AL: "Adaptive Control of Multi-Tiered Web Applications Using Queueing Predictor", NETWORK OPERATIONS AND MANAGEMENT SYMPOSIUM, 2006. NOMS 2006. 10TH IEE E/IFIP VANCOUVER, BC, CANADA 03-07 APRIL 2006, PISCATAWAY, NJ, USA,IEEE, 3 April 2006 (2006-04-03), pages 106-114, XP010935672, ISBN: 978-1-4244-0142-0 * Section II.b * ----- | 3,4 | |

TECHNICAL FIELDS
SEARCHED    (IPC)

The present search report has been drawn up for all claims

| Place of search | Date of completion of the search | Examiner |
|---|---|---|
| The Hague | 18 August 2015 | Dely, Peter |

EPO FORM 1503 03.82 (P04C01)

22

## ANNEX TO THE EUROPEAN SEARCH REPORT
## ON EUROPEAN PATENT APPLICATION NO.

EP 15 38 2046

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2015

| Patent document cited in search report | | Publication date | Patent family member(s) | | Publication date |
|---|---|---|---|---|---|
| US 6748450 | B1 | 08-06-2004 | GB<br>US | 2363224 A<br>6748450 B1 | 12-12-2001<br>08-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8762567 B2
- US 7187651 B1
- US 7266612 B1